# EUROPÄISCHE PATENTSCHRIFT

(11) **EP 0 842 716 B1**
(45) Veröffentlichungstag und Bekanntmachung des Hinweises auf die Patenterteilung: **11.12.2002**
(21) Anmeldenummer: 97402593.4
(22) Anmeldetag: 31.10.1997
(51) Int. Cl.: B21C 37/08, B21C 37/083, B21C 47/24

(54) **Vorrichtung zur Herstellung von Metallröhrchen grosser Länge**
Device for the manufacture of long lengths of metallic tubes
Dispositif de fabrication de tubes métalliques de grande longueur

(30) Priorität: 16.11.1996 DE 19647449
(43) Veröffentlichungstag der Anmeldung: 20.05.1998
(73) Patentinhaber: Nexans, 75008 Paris (FR)
(72) Erfinder: Staschewski, Harry, 30853 Langenhagen (DE)
(74) Vertreter: Döring, Roger, Dipl.-Ing.

(56) Entgegenhaltungen:
- EP-A- 0 721 818
- DE-A- 4 434 133
- US-A- 4 720 054
- US-A- 5 191 911

## Beschreibung

Die Erfindung betrifft eine Vorrichtung zur Herstellung von Metallröhrchen großer Länge nach dem Oberbegriff des Anspruchs 1.

Aus der DE 44 34 133 A1 ist ein Verfahren zur Herstellung eines optischen Kabels aus einem Metallrohr bekannt, bei welchem ein Metallband kontinuierlich von einem Ringbund abgezogen, zu einem Rohr mit Längsschlitz geformt und der Längsschlitz verschweißt wird. Das Metallrohr dient hier als Schutz für Lichtwellenleiter, die bei der Herstellung des Metallrohres in das noch offene Rohr mit Längsschlitz eingefahren werden. Bei diesen Metallröhrchen handelt es sich um solche mit sehr geringem Durchmesser, z. B. 3,5 mm und einer Wanddicke von 0,2 mm.

Insbesondere wenn solche Metallröhrchen mit eingelegten Lichtwellenleiter in sogenannten Seekabeln oder Luftkabeln eingesetzt werden sollen, ist es erforderlich bzw. nützlich, daß Einzellängen von 6000 m und mehr gefertigt werden können.

Da die von den Stahlwerken gelieferten Ringbunde bei den genannten Abmessungen, d. h. eine Bandbreite von ca. 15 mm und eine Wanddicke von ca. 0,2 mm, aus Gründen der Stabilität des Ringbundes und aus Transportgründen eine maximale Länge von 2000 bis 2500 m an Metallband aufnehmen können, müssen Anfang und Ende der Ringbunde durch eine sogenannte Querschweißnaht verbunden werden.

Da bei der Herstellung der Quemahtschweißung die Nahtstelle während der Schweißung stillstehen muß, sind verschiedene Möglichkeiten entwickelt worden, den kontinuierlichen Rohrfertigungsprozeß nicht zu unterbrechen.

Eine Möglichkeit besteht darin, das Metallband vor der Rohrfertigung umzuwickeln, d. h. die einzelnen Ririgbunde werden auf eine größere Vorratsspule umgewickelt, wobei Ende und Anfang zweier aufeinander folgender Ringbunde bei unterbrochenem Wickelvorgang miteinander verschweißt werden. Auf diese Weise können bei entsprechend größeren Vorratsspulen nahezu unendlich große Bandlängen erzeugt werden.

Probleme treten auf, wenn das Verhältnis von äußerem Ringbunddurchmesser zur Bandbreite ein bestimmtes Maß überschreitet, da dann die Stabilität des Ringbundes verlorengeht und es zu Verschiebungen der einzelnen Windungen kommt. Darüber hinaus sind Beschädigungen an den Rändern des Metallbandes und auch an der Bandoberfläche infolge von Kaltverschweißungen bei einigen Metallen nicht auszuschließen. Weiterhin kann es beim Umwickeln zu unterschiedlichen Banddehnungen kommen. Außerdem ist der Umwickelvorgang sehr zeit- und damit kostenaufwendig.

Eine weitere Möglichkeit Bänder großer Länge herzustellen besteht darin, daß das vom Ringbund abgezogene Metallband in einen sogenannten Speicher eingefahren wird. Wenn das Ende des Ringbundes erreicht ist, wird das Ende festgehalten und mit dem Anfang eines nachfolgenden Ringbundes verschweißt. Während des Schweißvorgangs wird das Bandmaterial für die kontinuierliche Fertigung aus dem Speicher entnommen (US-PS 5 191 911).

Aus der DE 26 04 324 B2 ist eine Vorrichtung zur Herstellung von längsnahtgeschweißten Rohren aus Metallband bekannt, bei welcher mehrere Ringbunde auf eine Wickelhülse stramm aufgewickelt sind und die Wickelhülse auf einem drehbaren Teller angeordnet ist, wobei die Längsachse der Wickelhülse in vertikaler Richtung verläuft. Das Metallband wird zunächst von dem obersten Ringbund abgezogen und der Rohrform-/Schweißanlage über eine Bandumlenkeinrichtung und einen Bandspeicher zugeführt. Nachdem der erste Ringbund verbraucht ist, wird der Anfang des nachfolgenden Ringbundes in die Bandumlenkeinrichtung eingefädelt und der Quernahtschweißanlage zugeführt und dort an das festgehaltene Ende des vorhergehenden Ringbundes angeschweißt. Während dieser Arbeiten wird das Metallband aus dem Bandspeicher der Rohrform-/Schweißanlage zugeführt.

Ein Arbeiten mit einem Bandspeicher hat sich bei sehr dünnen und schmalen Bändern insbesondere aus zur Kaltverschweißung neigenden Metallen als nicht befriedigend erwiesen.

Aus der US 4 720 054 ist es bekannt, einen großen Bandvorrat dadurch herzustellen, daß man mehrere Ringbunde auf Ablageplatten lagert und die Ablageplatten auf eine Aufnahmetrommel aufsteckt. Bandanfang und Bandende von zwei benachbarten Ringbunden sind jeweils miteinander durch Schweißen verbunden, so daß eine einzige Länge von Metallband entsteht. Die Ringbunde liegen ohne weitere Befestigungsmittel auf den Ablageplatten und können somit auf den Ablageplatten verrutschen. Durch einen gesonderten Antrieb der Aufnahmetrommel wird versucht, das Verrutschen zu vermeiden, was jedoch mit einem zusätzlichen Aufwand verbunden ist.

Der Erfindung liegt von daher die Aufgabe zugrunde, eine Vorrichtung anzugeben, mit der es möglich ist, Metallrohre mit einem Durchmesser von weniger als 20 mm und einer Wanddicke von weniger als 0,4 mm in Längen von über 6000 m herzustellen.

Diese Aufgabe wird durch die im Kennzeichen des Anspruchs 1 erfaßten Merkmale gelöst.

Der wesentliche Vorteil der Erfindung ist darin zu sehen, daß für den Rohrherstellungsprozeß ohne Umwicklungsprozeß eine große Bandlänge aus einer Vielzahl von Ringbunden bereitgestellt werden kann. Bandbeschädigungen und vor allen Dingen Dehnungen des Bandes sind vermieden.

Insbesondere ist das Verfahren geeignet, große Längen von Lichtwellenleiterkabeln zu fertigen.

Weitere vorteilhafte Ausgestaltungen sind in den Unteransprüchen erfaßt.

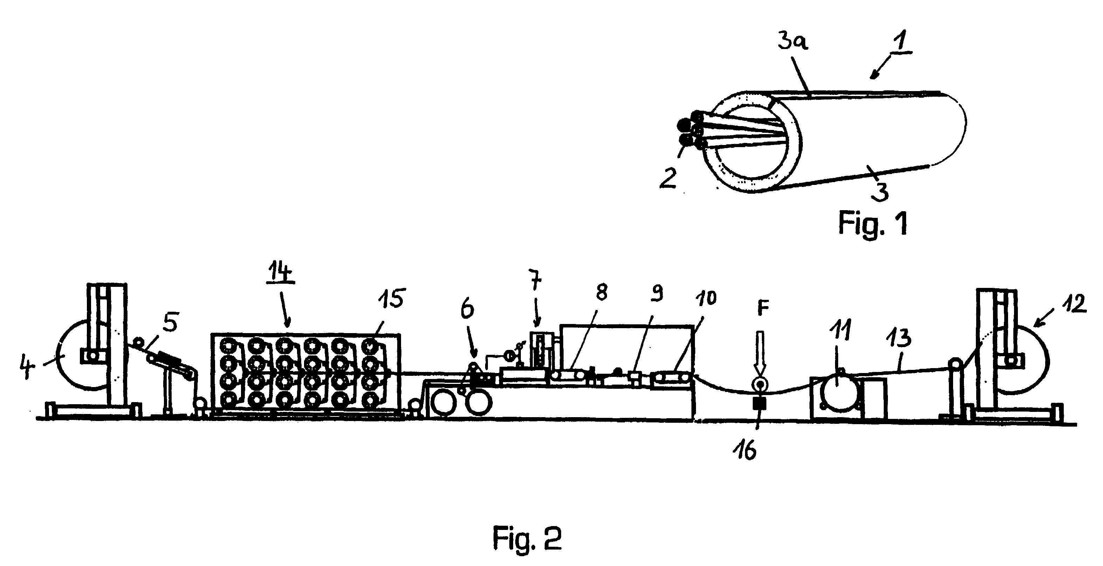

Die Erfindung ist anhand der in den Figuren 1 bis 6 schematisch dargestellten Ausführungsbeispiele näher erläutert.

Die Figur 1 zeigt eine perspektivische Ansicht eines Teils eines nach der Lehre der Erfindung hergestellten optischen Kabels. Das optische Kabel 1 besteht aus den Lichtwellenleitern 2 und dem die Lichtwellenleiter 2 umgebenden Metallrohr 3, welches eine Längsschweißnaht 3a aufweist. Der Freiraum zwischen den Lichtwellenleitem 2 und dem Metallrohr 3 kann mit einem sogenannten Petroleumjelly ausgefüllt sein, um eine Längswasserwanderung zu verhindern. Die Anzahl der Lichtwellerleiter 2 liegt üblicherweise zwischen 6 und 20, kann jedoch bis zu 40 betragen. Die Lichtwellenleiter 2 haben eine größere Länge als das Metallrohr 3, verlaufen also wellen-, wendel- oder sinusförmig in dem Metallrohr 3. Die Überlänge beträgt normalerweise in etwa 3 ‰. Die Wanddicke s des Metallrohres beträgt z. B. 0,2 mm, während sein Außendurchmesser 3,5 mm beträgt. Dies sind typische Daten für ein optisches Kabel, welches an Stelle eines Drahtes in einem Leitungseil angeordnet wird. Als Material für das Metallrohr 3 wird Edelstahl bevorzugt.

Die Figur 2 zeigt eine seitliche Ansicht einer Vorrichtung, mit welcher der Gegenstand nach Figur 1 bisher hergestellt wurde.

Von einer Vorratsspule 4 wird ein Band 5 kontinuierlich abgezogen und einer Formvorrichtung 6 zugeführt, in der das Band 5 zu einem Rohr mit Längsschlitz geformt wird. Teil dieser Formvorrichtung 6 ist eine nicht näher bezeichnete Besäumeinrichtung, in welcher das Band 5 exakt auf die benötigte Breite geschnitten wird. Die Formeinrichtung 6 besteht weiterhin aus mehreren nicht näher bezeichneten Formrollensätzen. Der Längsschlitz des geformten Rohres wird mittels einer Laserschweißeinrichtung 7 geschlossen. Für die exakte Führung des geschlitzten Rohres unterhalb der Schweißeinrichtung 7 sorgt ein erster Spannbackenabzug 8, der aus einer Vielzahl das Rohr umfassender Spannbackenpaare besteht, die über eine endlose Kette angetrieben sind. Hinter dem ersten Spannbackenabzug 8 ist eine Rohrreduzierung 9, z. B. eine Ziehmatrize angeordnet, in welcher der Durchmesser des Rohres verringert wird. Ein zweiter Spannbackenabzug 10 ist hinter der Rohrreduziereinrichtung 9 angeordnet, der an dem gezogenen Rohr angreift und dieses durch die Ziehmatrize zieht. Die Abzugsgeschwindigkeit des zweiten Spannbackenabzuges 10 ist gegenüber der Abzugsgeschwindigkeit des ersten Spannbackenabzugs 8 in Abhängigkeit vom Durchhang des Rohres zwischen der Ziehmatrize und dem ersten Spannbackenabzug 8 geregelt. Hinter dem zweiten Spannbackenabzug 10 befindet sind eine angetriebene Abzugscheibe 11 auf deren Umfangsfläche das Rohr mit mehreren Windungen aufliegt. Die Abzugsscheibe 11 ist mit einer Abzugsgeschwindigkeit angetrieben, welche gleich der Abzugsgeschwindigkeit des zweiten Spannbackenabzugs 10 ist. Hinter der Abzugsscheibe 11 ist ein Aufwickler 12 vorgesehen, der das Rohr 13 mit leichtem Zug aufwickelt.

Mit 14 ist eine Ablaufvorrichtung für eine Vielzahl von Lichtwellenleitern 2 bezeichnet, die mit einer Vielzahl von Spulen 15 bestückt ist, auf welche die Lichtwellenleiter 2 aufgewickelt sind.

Damit die Lichtwellenleiter 2 in dem Metallrohr 3 mit einer Überlänge vorliegen, wird das Metallrohr 3 kontinuierlich zwischen dem zweiten Spannbackenabzug 10, dessen Spannbackenpaare das Metallrohr 3 fest umgreifen und die durch die Rohrreduzierung entstehenden Verformungskräfte aufbringen, und der Abzugsscheibe 11 elastisch verformt, d. h. gedehnt. Dadurch wird auf die Abzugsscheibe 11 eine gleichgroße Länge von Metallrohr 3 und Lichtwellenleiter 2 aufgewickelt. Auf der Abzugsscheibe 11 "entspannt" sich der Zustand der elastischen Verformung, das Metallrohr 3 verkürzt sich auf den normalen Zustand.

Durch die Erfindung soll der Ablauf des Bandes verbessert werden.

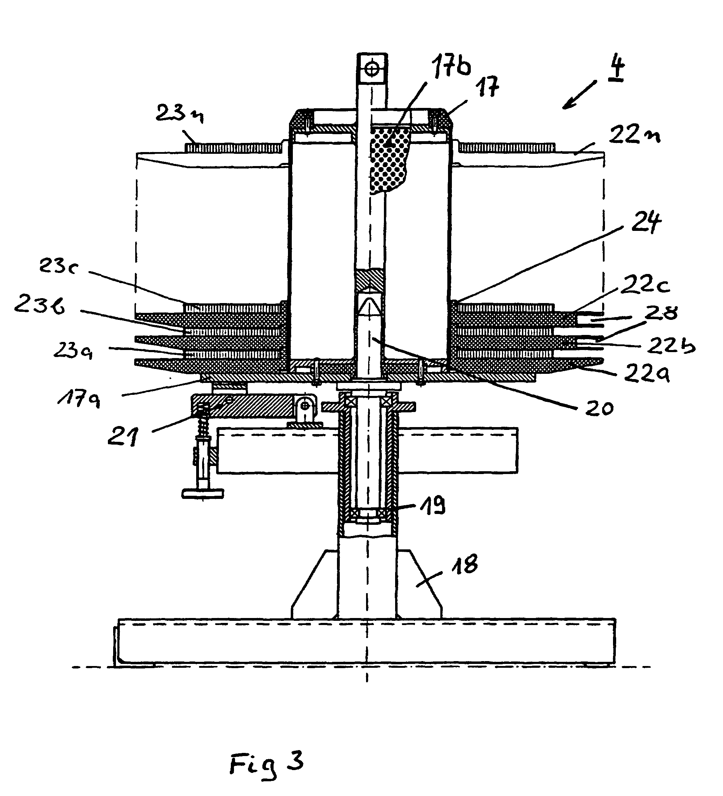

Figur 3 zeigt eine seitliche Ansicht, zum Teil geschnitten, des neuen Bandablaufes.

Der Bandablauf besteht aus einer Aufnahmetrommel 17 und einem Ablaufgestell 18. Das Ablaufgestell 18 weist eine Lagerung 19 für die Aufnahmetrommel 17 auf. Die Aufnahmetrommel 17 ist auf einen Zentrierdom 20 aufgesteckt und dort zentriert. Die Aufnahmetrommel 17 ist drehbar auf dem Ablaufgestell 18 angeordnet und wird mittels einer einstellbaren Bremsvorrichtung 21 abgebremst. Die Aufnahmetrommel 17 besitzt einen Aufnahmeteller 17a, auf dem ein Kern 17b aus Lochblech befestigt ist. Der Aufnahmeteller 17a trägt eine Vielzahl von Spannringen 22a, 22b, 22c, ... 22n, auf denen die Ringbunde 23a, 23b, 23c, ... 23n lagern. Die Ringbunde 23 sind auf den Spannringen 22 festgespannt. Die Spannringe 22 sind mittels in Figur 3 nicht dargestellter Arretierstifte an der Aufnahmetrommel 17 befestigt, und damit gegen Verdrehen gesichert, so daß sich die einzelnen Ringbunde 23 während des Abwickelns nicht gegeneinander verdrehen können. Im Übergangsbereich von Ringbund zu Ringbund wird damit eine Beschädigung des Metallbandes wirkungsvoll verhindert. Die Ringbunde 23 sind horizontal gelagert. Dadurch liegen die einzelnen Windungen des Metallbandes in den Ringbunden 23 völlig entspannt vor.

Die Spannringe 22 lagern aufeinander, u. z. auf einer flanschartigen Erhebung 24 am inneren Durchmesser. Diese Erhebung 24 ist so bemessen, daß der Abstand zwischen den Spannringen 22 in vertikaler Richtung größer ist als die Bandbreite des Metallbandes.

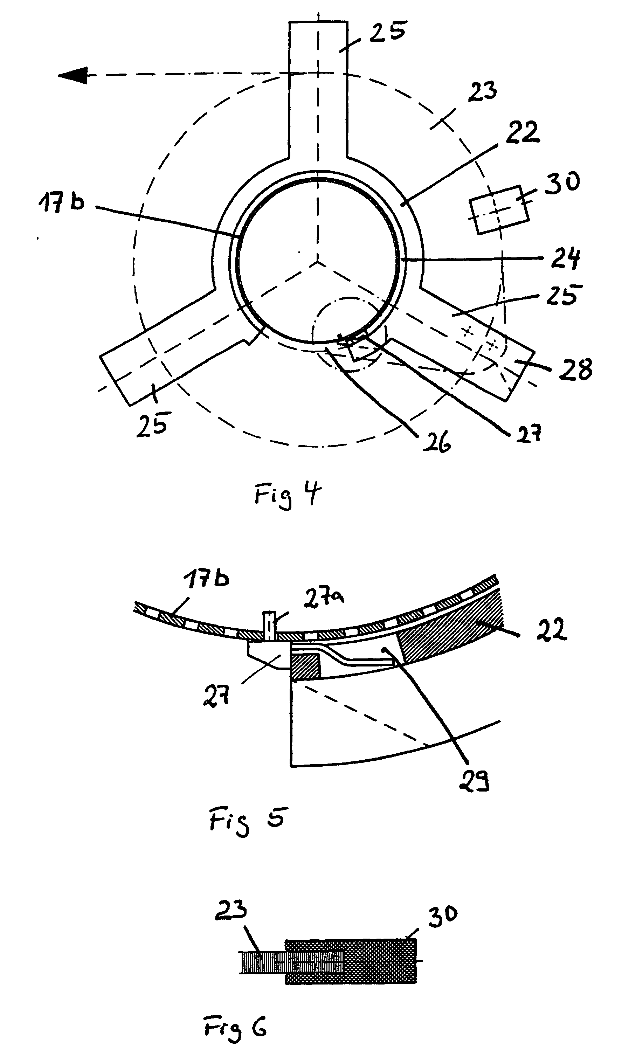

In der Figur 4 ist eine Draufsicht auf einen Spannring 22 dargestellt. Der Spannring besitzt drei sich in radialer Richtung erstreckende Arme 25 sowie eine Öffnung 26. Als Material für den Spannring 22 wird Kunststoff, z. B. Polyethylen verwendet. Wegen der Öffnung 26 kann der Spannring 22 gespannt werden, wobei die beiden der Öffnung 26 benachbarten Arme 25 aufeinander zubewegt werden. Dabei verringert sich der innere Durchmesser des Spannrings 22 und damit der äußere Durchmesser der Erhebung 24. Im ungespannten Zustand ist der Außendurchmesser der Erhebung größer als der Innendurchmesser der Ringbunde 23, so daß jedes Ringbund 23 fest mit dem Spannring 22 verbunden ist. Mit 27 ist der Arretierstift bezeichnet, der mit einem Stift 27a in eine der Öffnungen des Kerns 17b aus Lochblech eindringt.

In der Figur 4 ist ferner der Verlauf des Metallbandes zwischen zwei benachbarten Ringbunden 23 dargestellt. Die strichpunktierte Linie verläuft vom inneren Durchmesser (Bandende) des oben liegenden Ringbundes 23 zum äußeren Durchmesser (Bandanfang) des darunterliegenden Ringbundes 23. Für die exakte Bandumlenkung sorgt ein Bandumlenkungssystem in Form eines Schlitzes 28 am äußeren Ende eines der Arme 25.

Die Figur 5 zeigt die Anordnung des Arretierstiftes 27, der in einer Kammer 29 der Spannringe 22 gelagert ist.

Figur 6 zeigt noch ein Klemmteil 30 aus Polyethylen, welches von außen auf die Ringbunde 23 aufgesteckt ist, u. z. zwischen den Armen 25. Diese Klemmteile 30 verhindern ein Verschieben der äußeren Lagen der Ringbunde 23. Sie fallen selbsttätig ab, wenn so viele Windungen abgezogen worden sind, daß eine Klemmung nicht mehr erfolgt.

Der Fertigungsablauf für den Ringbundstapel sieht folgendermaßen aus:

Zunächst wird auf einem ersten Spannring 22a ein erstes Ringbund 23a festgespannt und auf dem Kern 17b der Aufnahmetrommel 17 mit dem Arretierstift 27 befestigt. Ein zweites Ringbund 23b wird auf einer nicht dargestellten Halterung gelagert, so daß die inneren Windungen des Ringbundes 23b frei zugänglich sind. Der Anfang des ersten Ringbundes 23a (äußerer Durchmesser des Ringbundes 23a) wird mit dem Ende des Ringbundes 23b (innerer Durchmesser des Ringbundes 23b) durch Laserschweißen verbunden. Anschließend wird der Spannring 22b in das Ringbund 23b eingespannt, wobei das Metallband in das Bandumlenkungssegment (s. Schlitz 28) eingelegt werden muß. Anschließend wird der Spannring 22b mit dem Ringbund 23b auf den auf der Aufnahmetrommel 17 befindlichen Spannring 22a aufgelegt. Dabei ist darauf zu achten, daß das Metallband zwischen den beiden Ringbunden 23a und 23b gestrafft und in dem Schlitz 28 verläuft. Auf jedes Ringbund 23a und 23b werden die Klemmteile 30 aufgesteckt.

In gleicher Weise werden die übrigen Spannringe 22c bis 22n und die Ringbunde 23c und 23n behandelt. Nachdem die gewünschte Bandlänge durch Verbinden der Ringbunde 23 miteinander erreicht ist, wird die bestückte Aufnahmetrommel 17 auf das Ablaufgestell 18 gesetzt und der Bandanfang des Ringbundes 23 n in die Rohrfertigungsanlage eingefädelt.

Nach diesen Arbeiten kann die Fertigung des Rohres bzw. des optischen Kabelelementes beginnen.

## Patentansprüche

1. Vorrichtung zur Herstellung von Metallröhrchen kleinen Durchmessers und großer Länge, mit einem Ringbund (4) von dem ein Metallband (5) abgezogen wird, einer das Metallband (5) allmählich zu einem Rohr mit Längsschlitz formenden Formvorrichtung (6) und einer den Längsschlitz verschweißenden Schweißeinrichtung (7), bei welcher Anfang und Ende einer Vielzahl von Ringbunden miteinander durch Schweißen verbunden werden, **dadurch gekennzeichnet, daß** die Ringbunde (23a... 23n) auf einer Aufnahmetrommel (17) gelagert sind, welche drehbar auf einem Ablaufgestell (18) montiert ist, und einen Aufnahmeteller (17a) für die Ringbunde (23a... 23n) aufweist, daß eine Vielzahl von übereinander angeordneten Spannringen (22a... 22n) vorgesehen ist, von denen der erste (22a) auf dem Aufnahmeteller (17a) lagert und von denen jeder ein Ringbund (23) trägt, und jeder Spannring (22) fest mit einem Ringbund (23) verbunden ist und an der Aufnahmetrommel (17) befestigt ist und Mittel aufweist, die ein Herausführen des Bandkemendes zum Bandanfang des darüber angeordneten Ringbundes (23) aufweist.

2. Vorrichtung nach Anspruch 1, **dadurch gekennzeichnet, daß** die Aufnahmetrommel (17) mit einer zentralen Bohrung versehen ist, in welche ein auf dem Ablaufgestell (18) vorgesehener Zentrierdom (20) eindringt.

3. Vorrichtung nach Anspruch 1 oder 2, **dadurch gekennzeichnet, daß** der Kem (17b) der Aufnahmetrommel (17) aus Lochblech besteht.

4. Vorrichtung nach einem der Ansprüche 1 bis 3, **dadurch gekennzeichnet, daß** jeder Spannring (22) als offener Ring ausgebildet ist, von dem aus sich mindestens drei Arme (25) in radialer Richtung erstrecken und der auf den Kern (17b) der Aufnahmetrommel (17) aufspannbar ist.

5. Vorrichtung nach einem der Ansprüche 3 bis **4, dadurch gekennzeichnet, daß** jeder Spannring (22) einen Arretierstift (27) aufweist, mit dem er in eines der Löcher des Kerns (17b) einrastend mit der Aufnahmetrommel (17) verdrehungsfrei verbunden ist.

6. Vorrichtung nach einem der Ansprüche 1 bis 5, **dadurch gekennzeichnet, daß** jeder Spannring (22) an seinem inneren Durchmesser eine flanschartige Erhebung (24) aufweist, deren äußerer Durchmesser im entspannten Zustand des Spannringes (22) geringfügig größer ist als der Innendurchmesser der Ringbunde (23).

7. Vorrichtung nach einem der Ansprüche 4 bis 6, **dadurch gekennzeichnet, daß** einer der Arme (25) des Spannringes (22) als Bandumlenksegment (28) ausgebitdet ist.

8. Vorrichtung nach einem der Ansprüche 4 bis 7, **dadurch gekennzeichnet, daß** der Durchmesser des um die freien Enden der Arme (25) geschlagenen Kreisbogens größer ist als der Außendurchmesser der Ringbunde (23).

9. Vorrichtung nach einem der Ansprüche 1 bis 8, **dadurch gekennzeichnet, daß** die Wanddicke der Spannringe (22) größer ist als die Breite des Metallbandes.

10. Vorrichtung nach einem der Ansprüche 1 bis 9, **dadurch gekennzeichnet, daß** auf die Ringbunde (23) ein Klemmteil (30) von außen aufgeklemmt ist, welches beim Abziehen des Bandes selbsttätig abfällt.

## Claims

1. A device for manufacturing long metal tubes of small diameter with a series of supply coils from which a metal band (5) is drawn, a form device (6), which gradually turns the metal band (5) into a tube with a longitudinal slit, and a welding device (7), which welds the longitudinal slit and with which the beginning and the end of a large number of annular collars are welded together, **characterized in that** the annular coils (23a... 23n) are stored on a receptor drum (17), which is rotatable on an unwinding creel (18) and has a receptor plate (17a) for the annular coils (23a... 23n), and wherein a large number of lock collars (22a... 22n), one on top of the other, are provided, of which the first (22a) rests on the receptor plate (17a) and of which every lock collar carries an annular coil (23), and wherein every lock collar (22) is tightly connected to an annular coil (23) and attached to the receptor drum (17) and has means for withdrawing the band center end to the band beginning of the annular coil (23) above.

2. A device according to claim 1 **characterized in that** the receptor drum (17) has a central drilled hole into which a centering spike (20) located on the unwinding frame (18) penetrates.

3. A device according to claim 1 or 2 **characterized in that** the core (17b) of the receptor drum (17) is made of perforated sheet metal.

4. A device according to one of the claims 1 to 3 **characterized in that** each lock collar (22) is designed as an open ring, from which at least three arms (25) extend in radial direction and which can be tightened onto the core (17b) of the receptor drum (17).

5. A device according to one of the claims 3 to 4 **characterized in that** each lock collar (22) has a locking pin (27) that locks into one of the holes of the core (17b) and connects the lock collar (22) to the receptor drum (17) rotation-free.

6. A device according to one of the claims 1 to 5 **characterized in that** each lock collar (22) has a flange-like elevation (24) on its inner diameter, wherein the outer diameter of the elevation in the relaxed state of the lock collar (22) is slightly larger than the inner diameter of the annular coils (23).

7. A device according to one of the claims 4 to 6 **characterized in that** one of the arms (25) of the lock collar (22) is designed as a band guidance segment (28).

8. A device according to one of the claims 4 to 7 **characterized in that** that the diameter of the circle around the free ends of the arms (25) is lager than the outer diameter of the annular coils (23).

9. A device according to one of the claims 1 to 8 **characterized in that** the wall thickness of the annular coils (22) is larger than the width of the metal band.

10. A device according to one of the claims 1 to 9 **characterized in that** that a clamp (30) is attached to the annular coils (23) from outside and that the clamp falls off automatically when the band is unwound.

## Revendications

1. Dispositif pour la confection de petits tubes métalliques de diamètre réduit et de grande longueur, avec une couronne (4) de laquelle est dévidée une bande métallique (5), un dispositif de formage (6), formant progressivement la bande métallique (5) en un tube avec une fente longitudinale et un dispositif de soudage (7), soudant la fente longitudinale et où un grand nombre de couronnes est relié par soudage, **caractérisé par le fait que** les couronnes (23a ... 23n) sont disposées sur un tambour récepteur (17) monté sur un bâti dérouleur (18) de façon à pouvoir tourner et comportant un plateau récepteur (17a) pour les couronnes (23a ... 23n), qu'un grand nombre d'anneaux de serrage (22a ... 22n), disposés les uns sur les autres, est prévu, le premier (22a) étant logé sur le plateau récepteur (17a) et dont chacun porte une couronne (23) et que chaque anneau de serrage (22) est solidement relié à la couronne (23) et fixé au tambour récepteur (17) et présente des moyens permettant de faire sortir la fin du noyau de bande vers le début de bande de la couronne (23) disposée au-dessus.

2. Dispositif selon la revendication 1, **caractérisé par le fait que** le tambour récepteur (17) est pourvu d'un alésage central dans lequel pénètre un mandrin de centrage (20) prévu sur le bâti dérouleur (18).

3. Dispositif selon une des revendications 1 ou 2, **caractérisé par le fait que** le noyau (17b) du tambour récepteur (17) est en tôle perforée.

4. Dispositif selon une des revendications 1 à 3, **caractérisé par le fait que** chaque anneau de serrage (22) se présente sous forme d'anneau ouvert, duquel s'étendent au moins trois bras (25) dans le sens radial et qui peut être tendu sur le noyau (17b) du tambour récepteur (17).

5. Dispositif selon une des revendications 3 à 4, **caractérisé par le fait que** chaque anneau de serrage (22) est fixé dans un des trous du noyau (17b) par une broche d'arrêt (27), en s'engageant dans le tambour récepteur (17) de façon à être bloqué en rotation.

6. Dispositif selon une des revendications 1 à 5, **caractérisé par le fait que** chaque anneau de serrage (22) présente sur son diamètre intérieur un bossage en forme de collerette (24) dont le diamètre extérieur en état détendu de l'anneau de serrage (22) est légèrement supérieur au diamètre intérieur des couronnes (23).

7. Dispositif selon une des revendications 4 à 6, **caractérisé par le fait qu'**un des bras (25) de l'anneau de serrage (22) se présente sous forme de segment de déviation de la bande (28).

8. Dispositif selon une des revendications 4 à 7, **caractérisé par le fait que** le diamètre du cercle décrit autour des extrémités libres des bras (25) est supérieur au diamètre extérieur des couronnes (23).

9. Dispositif selon une des revendications 1 à 8, **caractérisé par le fait que** l'épaisseur de la paroi des anneaux de serrage (22) est supérieure à la largeur de la bande métallique.

10. Dispositif selon une des revendications 1 à 9, **caractérisé par le fait qu'**une pièce de serrage (30) est serrée par l'extérieur sur les couronnes (23), tombant automatiquement lors du dévidage de la bande.
